(19) **Europäisches Patentamt**

**European Patent Office**

**Office européen des brevets**

(11) **EP 0 939 293 B1**

(12) **FASCICULE DE BREVET EUROPEEN**

(45) Date de publication et mention
de la délivrance du brevet:
**07.01.2004   Bulletin 2004/02**

(51) Int Cl.⁷: **G01B 7/30**, G01R 33/07,
G01D 5/12

(21) Numéro de dépôt: **98402969.4**

(22) Date de dépôt: **27.11.1998**

(54) **Anneau magnetique multipolaire**

Mehrpoliger magnetischer Ring

Multipolar magnetic ring

(84) Etats contractants désignés:
**DE FR GB IT**

(30) Priorité: **02.12.1997  FR 9715169**

(43) Date de publication de la demande:
**01.09.1999   Bulletin 1999/35**

(73) Titulaire: **SNR ROULEMENTS**
**F-74010 Annecy (FR)**

(72) Inventeur: **Travostino, Francis**
**75116 Paris (FR)**

(74) Mandataire: **Ballot, Paul**
**Cabinet Ballot**
**122, rue Edouard Vaillant**
**92593 Levallois-Perret Cedex (FR)**

(56) Documents cités:
**DE-A- 3 725 405        DE-A- 4 428 333**
**US-A- 4 041 371**

## Description

La présente invention se rapporte à un anneau magnétique multipolaire, destiné à générer un champ magnétique de forme sinusoïdale dont la période correspond à un ou à plusieurs tours de l'anneau.

Une application particulière d'un tel anneau magnétique concerne son association avec des capteurs de type magnétique, notamment les capteurs de position absolue, utilisés par exemple dans des roulements capteurs.

Actuellement, les anneaux magnétiques multipolaires sont très souvent utilisés dans des applications de capteurs magnétiques de position, en raison de leur simplicité de mise en oeuvre et de leur faible coût. Le substrat des anneaux magnétiques multipolaires est généralement constitué d'au moins une phase magnétique, en ferrite ou en terres rares, dont les domaines magnétiques sont orientés par magnétisation afin de créer des pôles Nord et Sud. Selon un autre mode de réalisation, ce substrat peut être constitué de deux phases, dont l'une est magnétique, telle que décrite précédemment et l'autre est amagnétique, en élastomère, en polymère ou en matériau thermodurcissable par exemple, destinée à lier entre elles les différentes particules constitutives de la phase magnétique. Ce second mode de réalisation offre un excellent compromis entre les performances magnétiques et le coût de fabrication d'un tel anneau magnétique.

L'aimantation d'un anneau magnétique multipolaire pour obtenir une succession de pôles Nord et Sud peut être réalisée soit pôle par pôle avec une tête d'aimantation se déplaçant sur le substrat magnétique à aimanter, soit en créant tous les pôles à la fois grâce à un aimanteur à fil bobiné.

Lorsque ces anneaux magnétiques sont associés à des capteurs magnétiques de type sonde à effet Hall, magnétorésistance ou capteur à réluctance variable, ils génèrent des signaux électriques sinusoïdaux, dont l'exploitation délivre des informations sur la vitesse, le sens de rotation et la position relative des systèmes dans lesquels ils sont intégrés.

La figure $1_a$ est un exemple d'anneau magnétique circulaire à huit paires de pôles Nord et Sud, vue de dessus, qui associé à une sonde à effet Hall digitale placée en face de lui, délivre un signal électrique périodique, de forme carrée tel que représenté sur la figure $1_b$.

Pour un nombre de paires de pôles Nord et Sud, un type de matériau magnétique et une géométrie d'anneau magnétique - diamètres intérieur et extérieur, et épaisseur - déterminés, pour une technologie d'aimantation utilisée - avec tête d'aimantation ou aimanteur à fil bobiné - et pour une largeur de pôle donnée, le profil du champ magnétique, généré par l'anneau et capté par l'élément sensible d'un capteur magnétique associé, peut être différent. Les figures $2_a$ à $2_d$ dont des exemples de profils de champ magnétique délivrés par de tels anneaux magnétiques, profils respectivement de type sinusoïdal, de type trapézoïdal correspondant à un capteur plus prêt de l'anneau, de type triangulaire correspondant à un capteur plus loin de l'anneau, et de type sinusoïdal tronqué. Seul, le premier profil sinusoïdal permet d'effectuer des interpolations électroniques simples afin d'augmenter artificiellement la résolution des capteurs digitaux de position.

En conséquence, ces anneaux magnétiques multipolaires actuels ne servent à donner que des informations de position relative et en aucun cas de position absolue, c'est-à-dire de position du système associé qui soit connue sans la moindre ambiguïté dès sa mise sous tension, sans passer par une étape d'initialisation ou de recherche de la position de référence. En effet, il est impossible d'aimanter une seule paire de pôles Nord-Sud sur un anneau magnétique pour obtenir un profil de champ magnétique sinusoïdal à une période par tour de l'anneau.

L'invention vise à résoudre ce problème, en proposant notamment un anneau magnétique bipolaire, dont le profil d'aimantation spécifique génère un champ magnétique de forme sinusoïdale et ne possédant qu'une seule période par tour de l'anneau.

Pour cela, l'objet de l'invention est un anneau magnétique bipolaire destiné à générer un champ magnétique sinusoïdal, qui est cylindrique, avec une hauteur h et une largeur l comprise entre un diamètre intérieur $D_i$ et un diamètre extérieur $D_e$, et avec un diamètre de lecture $D_l$ situé par exemple au milieu de la largeur pour le positionnement d'un ou plusieurs capteurs magnétiques de lecture du champ magnétique émis par ledit anneau, caractérisé en ce que son aimantation réalise deux pôles Nord et Sud concentriques imbriqués l'un dans l'autre de telle sorte que leurs largeurs $L_p$ soient égales et constantes et que les deux transitions magnétiques entre chacun des deux pôles suivent chacune une courbe monotone se déplaçant selon la largeur ou la hauteur de l'anneau d'une demi-largeur de pôle par quart de tour de l'anneau, ces deux courbes étant décalées de 180°, afin que le champ magnétique ait une période unique correspondant à un tour de l'anneau.

D'autres caractéristiques et avantages de l'invention apparaîtront à la lecture de la description de deux modes de réalisation d'un anneau magnétique, illustrée par les figures suivantes qui sont, outre les figures $1_a$, $1_b$ et $2_a$ à $2_d$ déjà décrites :

- figure 3 : une vue de face d'un anneau magnétique selon un premier mode de réalisation;
- figure 4 : le profil du champ magnétique obtenu avec un anneau magnétique selon l'invention ;
- figures $5_a$ et $5_b$ : deux vues de côté et de face d'un anneau magnétique selon un deuxième mode de réalisation.

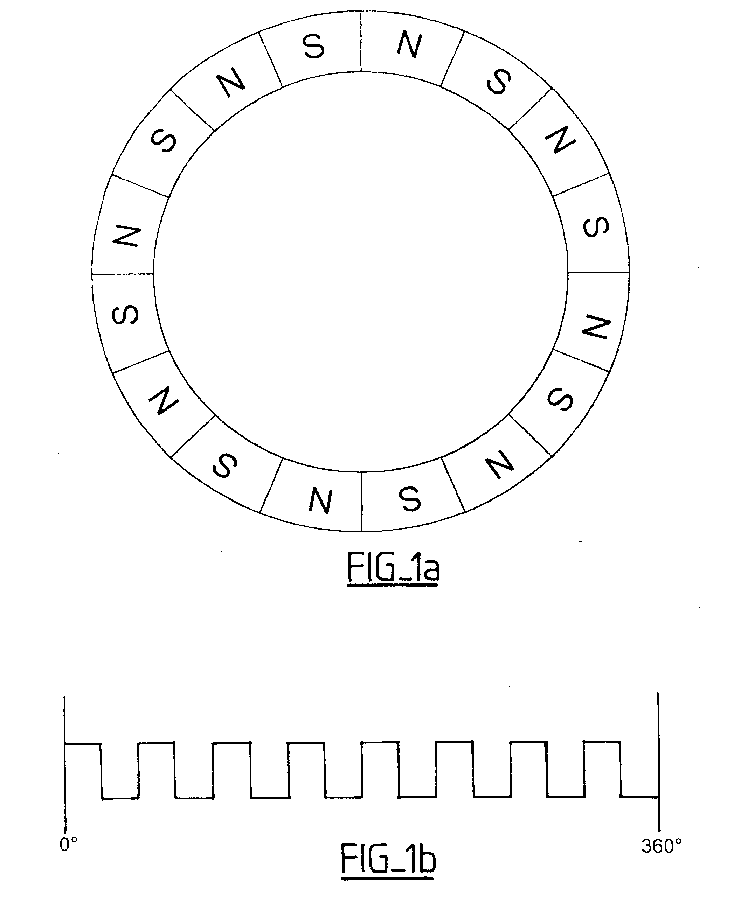

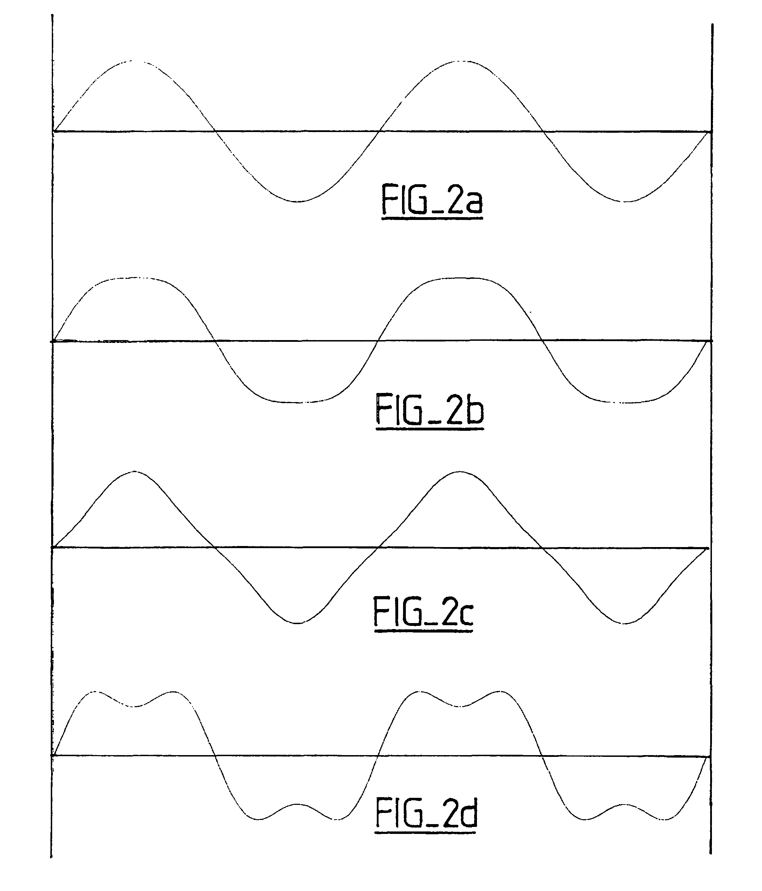

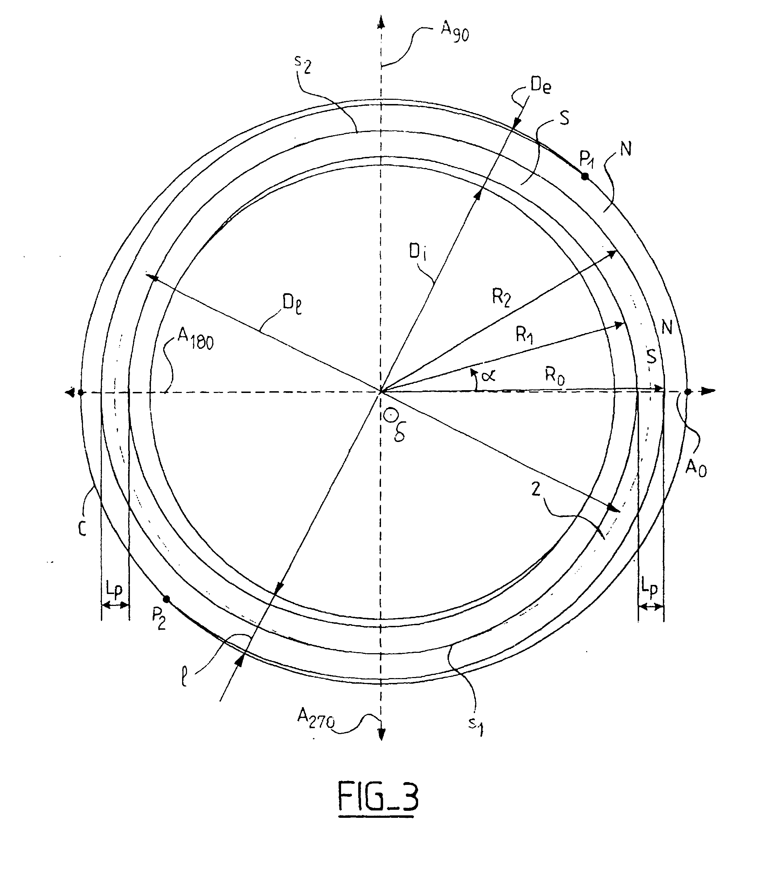

L'anneau magnétique 1 réalisé d'après un premier mode selon l'invention, représenté par une vue de face sur la figure 3, est cylindrique, dont les deux faces parallèles opposées ont une largeur radiale 1 constante, comprise entre un diamètre intérieur $D_i$ et un diamètre extérieur $D_e$, avec un diamètre $D_l$ dit de lecture situé préférentiellement au milieu de cette largeur. Ce diamètre $D_l$ correspond au diamètre de positionnement du ou des éléments sensibles d'un capteur magnétique destiné à lire le champ magnétique émis par l'anneau. Sur une face de cet anneau magnétique 1 sont aimantés deux pôles, un pôle Nord N et un pôle Sud S, imbriqués l'un dans l'autre suivant deux spirales $s_1$ et $s_2$ démarrant en deux points $P_1$ et $P_2$ diamétralement opposés de la circonférence C de l'anneau, et de longueur égale obtenue par rotation d'au moins un tour autour de l'axe de symétrie $\delta$ de l'anneau, de telle sorte que la largeur $L_p$ de chaque pôle reste constante et identique pour les deux pôles. Sur la figure 3, la longueur des deux spirales est obtenue par rotation d'un tour et quart. L'évolution de la forme des deux pôles, en spirale, est telle qu'au niveau du diamètre de lecture $D_l$, les deux transitions magnétiques en spirale $s_1$ et $s_2$ entre le pôle Nord N et le pôle Sud S se déplacent de façon monotone d'une demi-largeur de pôle $L_p$, par quart de tour de l'anneau, soit 90° mécaniques. Les équations qui régissent les variations des rayons $R_1$ et $R_2$ des spirales respectives $s_1$ et $s_2$ en fonction de l'angle mécanique $\alpha$ entre la position de référence 0° correspondant à un axe $A_0$, et un rayon quelconque R de l'anneau, sont les suivantes :

$$R_2 = R_0 - (L_p * \alpha/\pi)$$

$$R_1 = R_2 - L_p$$

$$R_0 = (D_1/2) + L_p$$

avec $R_0 = R_2$ si $\alpha = 0°$
et $\alpha$ prenant toutes les valeurs réelles comprises entre 0 et $2\pi$ radians.

Ainsi, pour la position 0° correspondant à l'axe $A_0$, le pôle Sud S est centré sur le diamètre de lecture $D_l$ d'une part et est encadré symétriquement par deux parties identiques du pôle Nord N, dont la largeur globale est fonction de la largeur l de l'anneau.

Pour la position 90° correspondant à l'axe $A_{90}$, la transition magnétique $s_2$ entre le pôle Sud S et le pôle Nord N coïncide avec le diamètre de lecture $D_l$ et la largeur de chaque pôle est égale à $L_p$ de part et d'autre de la transition $s_2$. En fonction de la largeur l de l'anneau, deux parties, identiques en largeur, des pôles Nord et Sud, peuvent encadrer les deux largeurs $L_p$ de ces pôles.

Pour la position 180° correspondant à l'axe $A_{180}$, le pôle Nord N est centré sur le diamètre de lecture $D_l$ et de plus il est encadré symétriquement par deux parties du pôle Sud S qui sont identiques, c'est-à-dire dont la largeur globale est fonction de la largeur l de l'anneau.

Enfin, pour la position 270° correspondant à l'axe $A_{270}$, la transition magnétique $s_1$ entre les pôles Sud S et Nord N coïncide avec le diamètre de lecture $D_l$. Chaque pôle est de largeur égale à $L_p$ de part et d'autre de la transition $P_1$.

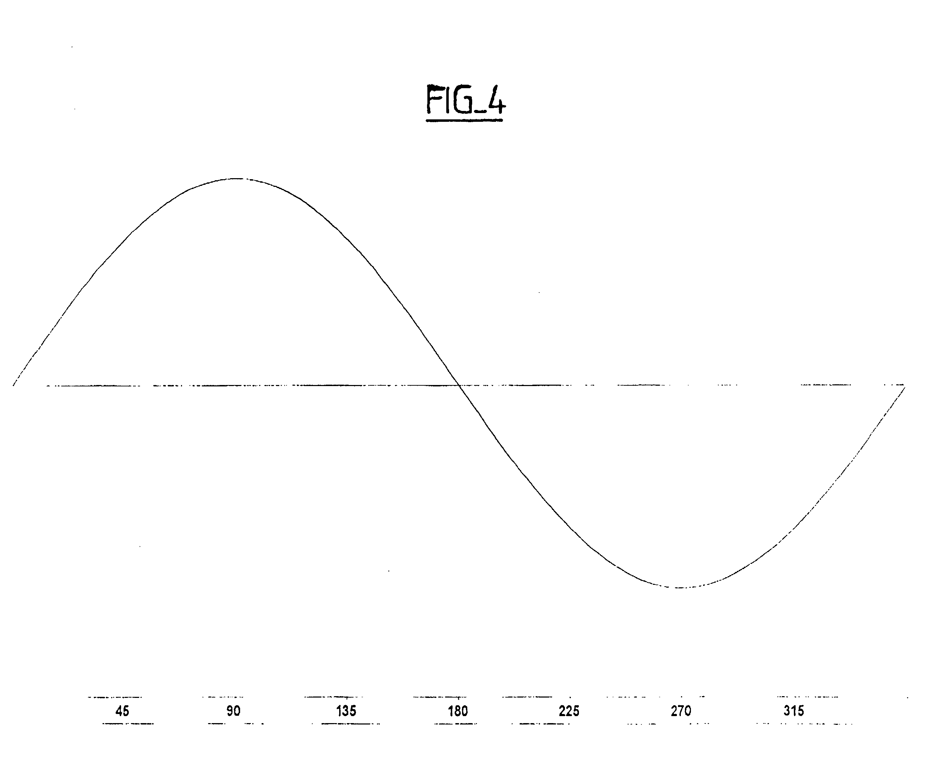

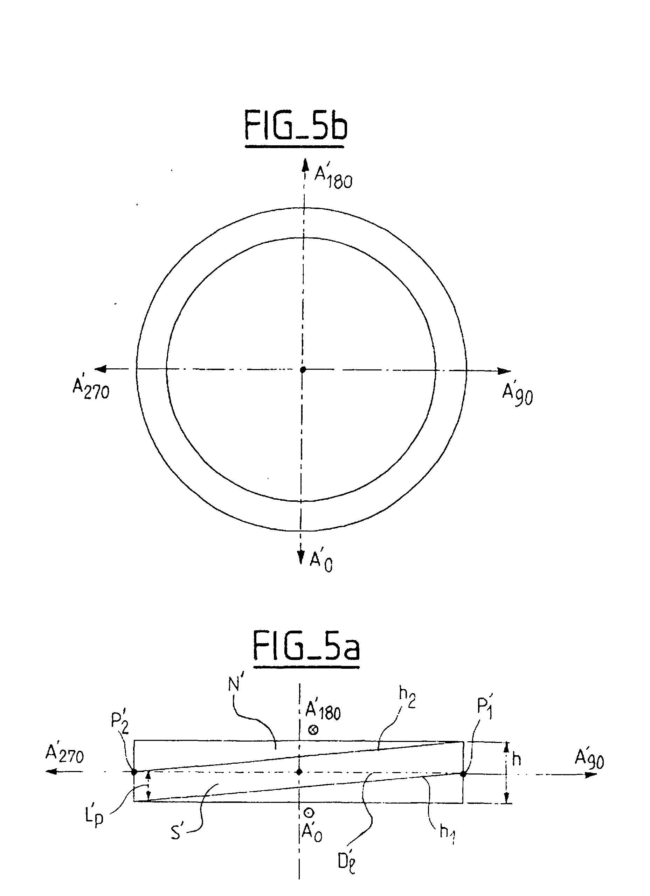

L'anneau magnétique bipolaire cylindrique ainsi décrit génère un champ magnétique de forme sinusoïdale ne possédant qu'une seule période par tour de rotation de l'anneau autour de son axe de symétrie $\delta$. Le profil de ce champ magnétique est représenté sur la figure 4.

Selon un second mode de réalisation d'un anneau magnétique, d'après l'invention, c'est la surface extérieure d'un anneau cylindrique de hauteur h, qui est aimantée pour obtenir un pôle Nord N' et un pôle Sud S', comme le montre la figure $5_a$, qui est une vue de côté de l'anneau selon sa hauteur h, tandis que la figure $5_b$ en est une vue selon une de ses deux faces parallèles. Le diamètre de lecture $D'_l$ est situé au milieu de la hauteur h.

Les deux pôles Nord N' et Sud S' ont la même largeur $L'_p$ constante et fonction de la hauteur h de l'anneau. Sur la figure $5_a$, la largeur $L'_p$ est égale à la moitié de la hauteur h. De plus, ils sont imbriqués l'un dans l'autre suivant deux hélices $h_1$ et $h_2$ centrées sur l'axe de symétrie $\delta'$ de l'anneau parallèles et séparées par une distance constante égale à $L'_p$, démarrant en deux points $P'_1$ et $P'_2$ diamétralement opposés sur le diamètre de lecture $D_l$, de telle sorte qu'au niveau du diamètre de lecture $D'_l$, le champ magnétique, aux quatre axes orthogonaux entre eux, $A'_0$, $A'_{90}$, $A'_{180}$ et $A'_{270}$, correspondant aux positions respectives 0°, 90°, 180° et 270°, passe respectivement par le maximum du pôle sud S', une transition magnétique $h_1$, le maximum du pôle Nord N' et une transition magnétique $h_2$ entre les deux pôles. La forme des deux pôles, en hélice, évolue de façon monotone d'une demi-largeur de pôle $L'_p$ par quart de tour de rotation de l'anneau, soit 90° mécanique.

Un anneau magnétique bipolaire selon l'invention a pour avantage de pouvoir être utilisé dans des roulements capteurs pour des applications automobiles, telles que la navigation et le contrôle de trajectoire par l'intermédiaire des roulements de colonne de direction. Une autre utilisation intéressante d'un tel anneau magnétique concerne les applications industrielles où il est utile de contrôler et de piloter la position absolue d'un dispositif, par exemple un moteur électrique d'entraînement de machine outil ou de robot.

## Revendications

1. Anneau magnétique multipolaire destiné à générer un champ magnétique sinusoïdal, qui est cylindrique, avec une hauteur (h) et une largeur (l) comprise entre un diamètre intérieur ($D_i$) et un diamètre extérieur ($D_e$), et avec un diamètre de lecture ($D_l$) situé par exemple au milieu de la largeur (l) pour le positionnement d'un ou plusieurs capteurs magnétiques de lecture du champ magnétique émis par ledit anneau, **caractérisé en ce que** son aimantation réalise deux pôles Nord (N) et Sud (S) concentriques imbriqués l'un dans l'autre de telle sorte que leurs largeurs ($L_p$) soient égales et constantes et que les deux transitions magnétiques entre chacun des deux pôles suivent chacune une courbe monotone se déplaçant selon la largeur ou la hauteur de l'anneau d'une demi-largeur du pôle par quart de tour de l'anneau, ces deux courbes étant décalées de 180°, afin que le champ magnétique ait une période unique correspondant à un tour de l'anneau.

2. Anneau magnétique multipolaire selon la revendication 1, **caractérisé en ce que** son aimantation est réalisée sur une de ses deux faces plates parallèles de largeur (l), suivant deux spirales imbriquées ($s_1$ et $s_2$) démarrant en deux points ($P_1$ et $P_2$) diamétralement opposés de la circonférence (C) de l'anneau et de longueur égale obtenue après une rotation d'au moins un tour autour de l'axe de symétrie (δ) de l'anneau.

3. Anneau magnétique multipolaire selon la revendication 2, **caractérisé en ce que** les deux transitions magnétiques définissant la largeur des deux pôles Nord (N) et Sud (S) sont réalisées sous forme de deux spirales ($s_1$ et $s_2$) concentriques dont chaque rayon ($R_1$ et $R_2$) varie selon les équations suivantes, en fonction de l'angle mécanique (α), exprimées en coordonnées polaires :

$$R_2 = R_0 - (L_p * \alpha / \pi)$$

$$R_1 = R_2 - L_p$$

$$R_0 = (D_l / 2) + L_p$$

avec $R_0 = R_2$ pour α = 0,
α compris entre 0 et 2π radians,
$D_l$ égal au diamètre de lecture de l'anneau,
$L_p$ égal à la largeur d'un pôle.

4. Anneau magnétique multipolaire selon les revendications 2 et 3, **caractérisé en ce que** les deux pôles magnétiques Nord (N) et Sud (S) sont imbriqués de telle sorte que :

- pour une position de référence 0° correspondant à un axe ($A_0$), le pôle Sud (S) est centré sur le diamètre de lecture ($D_l$) et encadré symétriquement par deux parties identiques du pôle Nord (N) ;

- pour une position 90° orthogonale à la précédente, correspondant à un axe ($A_{90}$), la transition magnétique ($s_2$) entre le pôle Sud (S) et le pôle Nord (N) coïncide avec le diamètre de lecture ($D_l$), et chaque pôle est de largeur égale à ($L_p$) ;

- pour une position 180° orthogonale à la précédente, correspondant à un axe ($A_{180}$), le pôle Nord (N) est centré sur le diamètre de lecture ($D_l$) et encadré symétriquement par deux parties identiques du pôle Sud (S) ;

- pour une position 270° orthogonale à la précédente, correspondant à un axe ($A_{270}$), la transition magnétique ($s_2$) entre les pôles Sud et Nord coïncide avec le diamètre de lecture ($D_l$) et chaque pôle est de largeur égale à ($L_p$).

5. Anneau magnétique multipolaire selon la revendication 1, **caractérisé en ce que** son aimantation est réalisée sur sa surface extérieure de hauteur (h), suivant deux hélices ($h_1$ et $h_2$) imbriquées, concentriques, parallèles et séparées d'une distance ($L'_p$) constante démarrant en deux points ($P'_1$ et $P'_2$) diamétralement opposés du diamètre de lecture ($D'_l$) et évoluant de façon monotone d'une demi-largeur de pôle ($L'_p$) par quart de tour de rotation de l'anneau de longueur égale obtenue après une rotation d'un tour autour de l'axe de symétrie (δ') de l'anneau.

6. Anneau magnétique multipolaire selon la revendication 5, **caractérisé en ce que** les deux pôles Nord (N') et Sud (S') sont imbriqués de telle sorte que, au niveau du diamètre de lecture ($D'_l$) ;

- pour une position de référence 0° correspondant à un axe ($A'_0$), le champ magnétique passe par le maximum du pôle Sud (S') ;

- pour une position 90° orthogonale à la précédente correspondant à un axe ($A'_{90}$), le champ magnétique passe par une transition magnétique ($h_1$) hélicoïdale entre le pôle Nord (N') et le pôle Sud (S') ;

- pour une position 180° orthogonale à la précédente correspondant à un axe ($A'_{180}$), le champ magnétique passe par le maximum du pôle Nord (N') ;

- pour une position 270° orthogonale à la précédente correspondant à un axe ($A'_{270}$), le champ magnétique passe par la seconde transition magnétique ($h_2$) hélicoïdale entre le pôle Sud (S') et le pôle Nord (N').

**Patentansprüche**

1. Magnetischer multipolarer Ring, der dazu bestimmt ist, ein sinusförmiges Magnetfeld zu erzeugen, der zylindrisch ist, eine Höhe (h) und eine Breite (l) aufweist, die zwischen einem inneren Durchmesser ($D_i$) und einem äußeren Durchmesser ($D_e$) liegt, und der einen Lesedurchmesser ($D_l$) aufweist, der sich für die Positionierung eines oder mehrerer magnetischer Lesesensoren des Magnetfeldes, das durch den Ring ausgesandt wird, beispielsweise in der Mitte der Breite (l) befindet, **dadurch gekennzeichnet, daß** seine Magnetisierung einen Nordpol (N) und einen Südpol (S) hervorruft, die sich ineinander konzentrisch so überlappen, daß ihre Breiten ($L_p$) gleich und konstant sind, und daß die zwei magnetischen Übergänge zwischen jedem der zwei Pole jeweils einer monotonen Kurve folgen, die sich für ein Viertel des Umfangs des Rings um eine halbe Breite des Poles längs der Breite oder der Höhe des Rings verschiebt, wobei die zwei Kurven um 180° versetzt sind, damit das Magnetfeld eine einheitliche Periode aufweist, die einem Umfang des Rings entspricht.

2. Multipolarer magnetischer Ring nach Anspruch 1, **dadurch gekennzeichnet, daß** eine Magnetisierung auf einer seiner zwei flachen, zur Breite (l) parallelen Stirnflächen realisiert ist, wobei sie zwei sich einander überlappenden Spiralen folgt ($s_1$ und $s_2$), die an zwei diametral gegenüberliegenden Punkten ($P_1$ und $P_2$) des Umfangs (C) des Rings beginnen und eine gleiche Länge aufweisen, die zumindest nach einer Drehung um zumindest einen Umfang um die Symmetrieachse ($\delta$) des Rings erhalten wird.

3. Multipolarer magnetischer Ring nach Anspruch 2, **dadurch gekennzeichnet, daß** die zwei magnetischen Übergänge, welche die Breite des Nordpols (N) und des Südpols (S) definieren, in der Form zweier konzentrischer Spiralen ($s_1$ und $s_2$) realisiert sind, von welchen sich der jeweilige Radius ($R_1$ und $R_2$) in Abhängigkeit von dem mechanischen Winkel ($\alpha$), ausgedrückt in Polarkoordinaten, gemäß den folgenden Gleichungen ändert:

$$R_2 = R_0 - (L_p * \alpha/\pi)$$

$$R_1 = R_2 - L_p$$

$$R_0 = (D_1/2) + L_p$$

mit $R_0 = R_2$ für $\alpha = 0$, wobei $\alpha$ zwischen 0 und $2\pi$ rad enthalten ist, $D_1$ gleich dem Lesedurchmesser

des Rings ist und $L_p$ gleich der Breite eines Pols ist.

4. Multipolarer magnetischer Ring nach den Ansprüchen 2 und 3, **dadurch gekennzeichnet, daß** der magnetische Nordpol (N) und der Südpol (S) einander derart überlappen, daß:

   - für eine Referenzposition 0°, entsprechend einer Achse ($A_0$), der Südpol (S) über den Lesedurchmesser ($D_l$) zentriert ist und symmetrisch durch zwei identische Bereiche des Nordpols (N) eingefasst ist;
   - für eine Position von 90° orthogonal zur vorhergehenden Position, entsprechend einer Achse ($A_{90}$), der magnetische Übergang ($s_2$) zwischen dem Südpol (S) und dem Nordpol (N) mit dem Lesedurchmesser ($D_l$) übereinstimmt und jeder Pol eine Breite aufweist, die gleich ($L_p$) ist;
   - für eine Position von 180 ° orthononal zur vorhergehenden Position, entsprechend einer Achse ($A_{180}$), der Nordpol (N) über den Lesedurchmesser ($D_l$) zentriert ist und symmetrisch durch zwei identische Bereiche des Südpols (S) eingefasst ist;
   - für eine Position von 270° orthogonal zur vorhergehenden Position, entsprechend einer Achse ($A_{270}$), der magnetische Übergang ($s_2$) zwischen dem Südpol und dem Nordpol mit dem Lesedurchmesser ($D_l$) übereinstimmt und jeder Pol eine Breite aufweist, die gleich ($L_p$) ist.

5. Multipolarer magnetischer Ring nach Anspruch 1, **dadurch gekennzeichnet, daß** seine Magnetisierung auf seiner äußeren Oberfläche mit einer Höhe (h) realisiert ist, die zwei Helices ($h_1$ und $h_2$) folgt, die einander überlappen, konzentrisch, parallel sind und voneinander um eine konstante Entfernung ($L'_p$) getrennt sind, die an zwei Punkten ($P'_1$ und $P'_2$) beginnen, die sich bezüglich des Lesedurchmessers ($D'_l$) diametral gegenüberliegen und sich in monotoner Weise um eine halbe Breite des Pols ($L'_p$) für ein Viertel einer Umdrehung des Rings mit gleicher Länge verändern, die nach einer Drehung um einen Umfang um die Symmetrieachse ($\delta'$) des Rings erhalten wird.

6. Multipolarer magnetischer Ring nach Anspruch 5, **dadurch gekennzeichnet, daß** der Nordpol (N') und der Südpol (S') einander so überlappen, daß auf Höhe des Lesedurchmessers ($D'_l$)

   - für eine Referenzposition 0°, entsprechend einer Achse ($A'_0$), das magnetische Feld durch das Maximum des Südpols (S') hindurchgeht;
   - für eine Position von 90° orthogonal zu der vorhergehenden Position, entsprechend einer Achse ($A'_{90}$), das Magnetfeld durch einen schraubenlinien-förmigen magnetischen Über-

gang (h$_l$) zwischen dem Nordpol (N') und dem Südpol (S') hindurchgeht;

- für eine Position von 180° orthogonal zur vorhergehenden Position, entsprechend einer Achse (A'$_{180}$), das Magnetfeld durch das Maximum des Nordpols (N') hindurchgeht;
- für eine Position von 270° orthogonal zur vorhergehenden Position, entsprechend einer Achse (A'$_{270}$), das Magnetfeld durch den zweiten schraubenlinien-förmigen magnetischen Übergang (h$_2$) zwischen dem Südpol (S') und dem Nordpol (N') hindurchgeht.

**Claims**

1. Multi-polar magnetic ring designed to generate a cylindrical sinusoidal magnetic field, of a height (h) and a width (l) included between an internal diameter (D$_i$) and an external diameter (D$_e$)and with a reading diameter (D$_l$) located for example in the middle of the width (l) to position one or more magnetic sensors to read the magnetic field emitted by the said ring, **characterised in that** its magnetisation creates two concentric poles, North (N) and South (S)which overlap such that their widths (L$_p$) are both equal and constant and that the two magnetic transitions between each of the two poles each follows a monotonous curve which moves along the width or height of the ring by a half-width of the pole per quarter of a turn of the ring, these two curves being offset by 180°, so that the magnetic field has a unique period corresponding to one rotation of the ring.

2. Multi-polar magnetic ring of claim 1, **characterised in that** its magnetisation is created on one of its flat faces that is parallel in width (l), along two overlapping spirals (s$_1$ and s$_2$) starting at two points (p$_1$ and p$_2$) that are diametrically opposed on the circumference (c) of the ring and of equal length obtained after a rotation of at least one turn around the axis of symmetry (δ) of the ring.

3. Multi-polar magnetic ring of claim 2, **characterised in that** the two magnetic transitions defining the width of the two poles, North (N) and South (S), are created in the form of two concentric spirals (s$_1$ and s$_2$) of which each radius (r$_1$ and r$_2$) varies according to the following equations, depending on the mechanical angle (α) expressed in polar coordinates:

$$R_2 = R_0) - ( L_p * \alpha / \pi )$$

$$R_1 = R_2 - L_p$$

$$R_0 = (Di/2) + (L_p)$$

where R$_0$ = R$_2$ when α = 0
α has a value included between 0 and 2π radians
D$_1$ is equal to the reading diameter of the ring
Lp is equal to the width of a pole

4. Multi-polar magnetic ring of claims 2 and 3, **characterised in that** the two magnetic poles, North (N) and South (S), overlap such that:

- for a reference position of 0° corresponding to an axis (A$_0$), the South pole(S) is centred around the reading diameter (D$_l$) and is symmetrically surrounded by two identical parts of the North pole (N);
- for a position 90° orthogonal to the previous position, corresponding to an axis (A$_{90}$), the magnetic transition (s$_2$) between the South pole (S) and the North pole (N) coincides with the reading diameter (D$_l$) and each pole has a width equal to (L$_p$);
- for a position 180° orthogonal to the previous position, corresponding to an axis (A$_{180}$), the North pole (N) is centred around the reading diameter (D$_l$) and is symmetrically surrounded by two identical parts of the South pole (S);
- for a position 270° orthogonal to the previous position, corresponding to an axis (A$_{270}$), the magnetic transition (s$_2$) between the South pole and the North pole coincides with the reading diameter (D$_l$) and each pole has a width equal to (L$_p$).

5. Multi-polar magnetic ring of claim 1, **characterised in that** its magnetisation is created on its external vertical surfaces (h) along two overlapping, concentric helixes (h$_1$ and h$_2$), which are parallel and separated by a constant distance (L'$_p$) starting at two points (p$_1$ and p$_2$) that are diametrically opposed on the reading diameter (D'$_1$) and evolving monotonously by a half-width of a pole (L'$_p$) per quarter of a turn of the ring and of equal length obtained after a rotation of at least one turn around the axis of symmetry (δ') of the ring.

6. Multi-polar magnetic ring of claim 5, **characterised in that** the two poles North (N') and South (S'), overlap such that:

- for a reference position of 0° corresponding to an axis (A'$_0$), the magnetic field passes through the maximum value of the South pole (S');
- for a position 90° orthogonal to the previous position, corresponding to an axis (A'$_{90}$), the magnetic field passes through a helicoidal magnetic

transition ($h_1$) between the North pole (N') and the South pole (S');

- for a position 180° orthogonal to the previous position, corresponding to an axis ($A'_{180}$), the magnetic field passes through the maximum value of the North pole (N');

- for a position 270° orthogonal to the previous position, corresponding to an axis ($A'_{270}$), the magnetic field passes through the second helicoidal magnetic transition ($h_2$) between the South pole (S') and the North pole (N').

FIG_1a

0°                                                                    360°

FIG_1b

FIG_2a

FIG_2b

FIG_2c

FIG_2d

FIG_3

FIG_4

45   90   135   180   225   270   315

## FIG_5b

## FIG_5a